(19) Europäisches Patentamt
European Patent Office
Office européen des brevets

(11) **EP 4 770 258 A1**

(12) **EUROPEAN PATENT APPLICATION**
published in accordance with Art. 153(4) EPC

(43) Date of publication:
**01.07.2026 Bulletin 2026/27**

(21) Application number: **24864477.5**

(22) Date of filing: **30.08.2024**

(51) International Patent Classification (IPC):
***H04W 74/08*** (2024.01)

(52) Cooperative Patent Classification (CPC):
**H04B 7/185; H04W 74/00; H04W 74/08;
H04W 74/0833**

(86) International application number:
**PCT/CN2024/115956**

(87) International publication number:
**WO 2025/055755 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023 CN 202311200965**

(71) Applicant: **HUAWEI TECHNOLOGIES CO., LTD.
Shenzhen 518129 (CN)**

(72) Inventors:
• **SHI, Meng
Shenzhen, Guangdong 518129 (CN)**

• **ZHANG, Xiaoyu
Shenzhen, Guangdong 518129 (CN)**
• **BAI, Zhongjin
Shenzhen, Guangdong 518129 (CN)**
• **XUE, Jiantao
Shenzhen, Guangdong 518129 (CN)**
• **LIAO, Shuri
Shenzhen, Guangdong 518129 (CN)**
• **DOU, Shengyue
Shenzhen, Guangdong 518129 (CN)**

(74) Representative: **Thun, Clemens
Mitscherlich PartmbB
Karlstraße 7
80333 München (DE)**

(54) **COMMUNICATION METHOD AND APPARATUS**

(57)    A communication method and apparatus are provided. The method includes: obtaining a plurality of SSBs, where indexes of any two of the plurality of SSBs are different; determining a plurality of search spaces of system information blocks based on the plurality of SSBs, where one of the plurality of search spaces is determined based on one of the plurality of SSBs; and receiving a plurality of system information blocks based on the plurality of search spaces, and combining and demodulating the plurality of system information blocks. According to the foregoing method, one system information block is received based on each of the plurality of search spaces, to obtain the plurality of system information blocks, and the plurality of system information blocks are combined and demodulated, so that a demodulation success rate of the system information blocks can be increased. The system information block is used for initial access, thereby increasing a success rate of an initial access process, improving initial access performance, and reducing initial access latency.

FIG. 5

**Description**

CROSS-REFERENCE TO RELATED APPLICATIONS

This application claims priority to Chinese Patent Application No. 202311200965.0, filed with the China National Intellectual Property Administration on September 15, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Non-terrestrial network (non-terrestrial network, NTN) communication is communication implemented via a non-terrestrial network device. An NTN system may include a satellite system and the like. Introducing the NTN communication to mobile network communication, for example, 5th generation (5th generation, 5G) communication can improve user experience. The NTN can provide communication services for an area that is difficult to be covered by a terrestrial network, such as an ocean, a forest, a desert, or a remote area. In addition, the NTN can enhance reliability of mobile communication, for example, provide more stable communication services for a user in a high-speed movement scenario such as a train or an airplane.

The satellite system is used as an example. Different from a terrestrial base station, a satellite serves as a network device, sequentially scans all beams, and broadcasts synchronization signal/physical broadcast signal blocks (synchronization signal/physical broadcast channel block, SS/PBCH block or SSB) and system information blocks 1 (system information block 1, SIB 1) corresponding to the SSBs for different communication areas. The SSBs in the different communication areas are distinguished through indexes (index) of the SSBs. Different SSB indexes represent downlink synchronization signals that are in different beam directions and that cover and serve different areas. After receiving an SSB, a terminal device completes timing synchronization and receives a SIB 1 based on the SSB, and then detects a SIB 19 based on a search space that is of the SIB 19 and that is configured in the SIB 1, and completes data parsing, to obtain ephemeris information of the satellite. After obtaining cell information and the ephemeris information, the terminal device sends a random access preamble on an uplink resource corresponding to an SSB index.

However, because the satellite moves at a higher speed and has a longer signal propagation distance relative to the ground, a signal path loss of the satellite is greater. The terminal device may be incapable of demodulating the SIB 1. Consequently, the terminal device cannot complete initial access. Therefore, to help the satellite serve as a base station to provide a communication service for the terminal device, how to overcome a signal path loss to improve coverage of a signal for communication between the terminal device and the satellite base station, how to ensure that the terminal device stably completes initial access, and how to reduce access latency of the terminal device are urgent problems that need to be resolved currently.

SUMMARY

This application provides a communication method and apparatus, to reduce access latency of a terminal device.

According to a first aspect, this application provides a communication method. The method is applicable to a scenario such as NTN communication. The method is performed by the terminal device or a module or a chip in the terminal device. Herein, an example in which the method is performed by the terminal device is used for description. In the method, a plurality of SSBs are obtained, where indexes of any two of the plurality of SSBs are different; a plurality of search spaces of system information blocks are determined based on the plurality of SSBs, where one of the plurality of search spaces is determined based on one of the plurality of SSBs; and a plurality of system information blocks are received based on the plurality of search spaces, and the plurality of system information blocks are combined and demodulated.

According to the foregoing method, one system information block is received based on each of the plurality of search spaces, to obtain the plurality of system information blocks, and the plurality of system information blocks are combined and demodulated, so that a demodulation success rate of the system information blocks can be increased. The system information block is used for initial access, thereby increasing a success rate of an initial access process, improving initial access performance, and reducing initial access latency.

In a possible implementation, the system information block includes one or both of the following: a system information block 1 SIB 1; and a system information block carrying ephemeris information.

According to the foregoing method, the system information block is the SIB 1 or the system information block that carries the ephemeris information. These system information blocks include information required for initial access, so that the initial access performance can be improved, and the initial access latency can be reduced.

In a possible implementation, the plurality of SSBs are first Y SSBs in all received SSBs sorted based on signal quality of the SSBs, and Y is an integer greater than 1.

In a possible implementation, the plurality of SSBs are determined according to a first rule, and the first rule is agreed on in a protocol or predefined.

In a possible implementation, the first rule is: the plurality of SSBs include a part or all of SSBs corresponding to an index range [j, j+2X]; or the plurality of SSBs include a part or all of SSBs corresponding to an index range [j-X, j+X], where j is an index of a first SSB, the first SSB is an SSB with optimal signal quality in all the received SSBs, and X is an integer greater than 1.

In a possible implementation, the plurality of SSBs include a first SSB, the first SSB is an SSB with optimal signal quality in all the received SSBs; and the plurality of SSBs include an SSB corresponding to at least one of the following indexes:

$$j-G+1, j+1, j-1, j, j+G+1, j-G, j+G, j-G-1, \text{ and } j+G-1,$$

where

j is an index of the first SSB, X is an integer greater than 1, and G is the length of an SSB signal coverage pattern of the SSBs.

In a possible implementation, the plurality of SSBs are located in a same SSB periodicity.

Because the plurality of SSBs are located in one SSB periodicity, receiving of the system information blocks can be completed in one SSB periodicity, thereby reducing latency of obtaining the system information blocks.

In a possible implementation, the plurality of system information blocks are located in a same system information block periodicity.

According to a second aspect, this application provides a communication method. The method is applicable to a scenario such as NTN communication. The method is performed by a network device or a module or a chip in the network device. Herein, an example in which the method is performed by the network device is used for description. In the method, SSBs are sent, where the SSBs indicate search spaces for system information blocks; and the system information blocks are sent in the search spaces, where Q SSBs are sent in an SSB periodicity, indexes of any two of the Q SSBs are different, Q is an integer greater than 1, and an SSB signal coverage pattern corresponding to the Q SSBs is preset or agreed on in a protocol.

In a possible implementation, the SSB signal coverage pattern is indicated to a terminal device.

In a possible implementation, the SSB signal coverage pattern includes coverage areas and/or coverage orders of the Q SSBs.

In a possible implementation, when the SSB signal coverage pattern is a square, the SSB signal coverage pattern includes G rows and G columns; or when the SSB signal coverage pattern is a rectangle, each row of the SSB signal coverage pattern includes coverage areas of H SSBs, and each column of the SSB signal coverage pattern includes coverage areas of J SSBs.

In a possible implementation, the coverage areas of the Q SSBs included in the SSB signal coverage pattern are distributed in ascending order of indexes of the Q SSBs in a manner of first row then column or first column then row, where each row includes coverage areas of G SSBs, and each column includes coverage areas of G SSBs.

In a possible implementation, the coverage areas of the Q SSBs included in the SSB signal coverage pattern are distributed in ascending order of indexes of the Q SSBs in a manner of first row then column or first column then row, where each row includes coverage areas of H SSBs, and each column includes coverage areas of J SSBs.

According to a third aspect, this application further provides a communication apparatus. The communication apparatus can implement any method provided in any one of possible implementations of the first aspect and the second aspect. The communication apparatus may be implemented by hardware, or may be implemented by hardware executing corresponding software. The hardware or the software includes one or more units or modules corresponding to the foregoing function.

In a possible implementation, the communication apparatus includes a processor. The processor is configured to support the communication apparatus in performing a corresponding function of the network device or the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal apparatus.

In a possible implementation, the communication apparatus includes corresponding functional modules, respectively configured to implement the steps in the foregoing method. The function may be implemented by hardware, or may be implemented by hardware executing corresponding software. The hardware or the software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in the first aspect or any one of possible implementations of the first aspect. Details are not described herein.

According to a fourth aspect, a computer-readable storage medium is provided. The computer-readable storage medium stores a computer program or instructions. When the computer program or the instructions are executed by a processor, the method in any one of possible implementations of the first aspect and the second aspect is implemented.

According to a fifth aspect, a computer program product storing instructions is provided. When a computer reads and executes the computer program product, the method in any one of possible implementations of the first aspect and the second aspect is implemented.

According to a sixth aspect, a circuit is provided. The circuit is configured to perform the method in any one of possible implementations of the first aspect and the second aspect, and the circuit may include a chip circuit. Optionally, the circuit may be further coupled to a memory.

According to a seventh aspect, a chip is provided. The chip includes a processor. When executing a computer program or instructions, the processor is configured to implement the method in any one of possible implementations of the first aspect and the second aspect. Optionally, the chip may further include a memory. The chip may include a chip, or may include a chip and another discrete device.

According to an eighth aspect, a communication apparatus is provided, and includes a processor. The processor implements the method in any one of possible implementations of the first aspect and the second aspect by using a logic circuit or by executing a computer program or instructions.

According to a ninth aspect, a communication apparatus is provided, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method in any one of possible implementations of the first aspect and the second aspect by using a logic circuit or by executing a computer program or instructions. Optionally, the communication apparatus further includes a memory, and the memory is configured to store a computer program or instructions.

According to a tenth aspect, a communication apparatus is provided, and includes a unit or a module configured to perform the method in any one of possible implementations of the first aspect and the second aspect.

According to an eleventh aspect, a circuit is provided. The circuit is configured to perform the method in any one of possible implementations of the first aspect and the second aspect, and the circuit may include a chip circuit. Optionally, the circuit may be further coupled to a memory.

## BRIEF DESCRIPTION OF DRAWINGS

FIG. 1 is a diagram of an architecture of a communication system to which an embodiment of this application is applied;
FIG. 2 is a diagram of a network architecture according to an embodiment of this application;
FIG. 3 is a diagram of a network architecture according to an embodiment of this application;
FIG. 4 is a diagram of a network architecture according to an embodiment of this application;
FIG. 5 is a schematic flowchart of a communication method according to an embodiment of this application;
FIG. 6 is a diagram of an SSB signal coverage pattern according to an embodiment of this application;
FIG. 7 is a diagram of a coverage area according to an embodiment of this application;
FIG. 8 is a diagram of a coverage area according to an embodiment of this application;
FIG. 9 is a schematic flowchart of a communication method according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

## DESCRIPTION OF EMBODIMENTS

A method provided in embodiments of this application may be applied to an NTN communication scenario. NTN communication may include networking by using a non-terrestrial network device, for example, an unmanned aerial vehicle, a high altitude platform station (high altitude platform station, HAPS), or a satellite, to provide services such as data transmission and voice communication for a terminal device. In addition, an NTN system may further include another non-terrestrial network device. This is not limited in this application. The NTN system may further support various mobile communication systems, for example, another communication system like a new radio (new radio, NR) system, a long term evolution (long term evolution, LTE) system, or a future communication system. This is not specifically limited herein.

The method provided in embodiments of this application may be applied to long term evolution (long term evolution, LTE) or a 5th generation (5th generation, 5G) communication system, for example, 5G new radio (new radio, NR), or may be applied to various future communication systems, for example, a 6th generation (6th generation, 6G) communication system. A communication method provided in embodiments of this application may be further applied to fields such as vehicle-to-everything (vehicle-to-everything, V2X) communication, the internet of vehicles, self-driving, and assisted driving.

The method and an apparatus provided in embodiments of this application are based on a same or similar technical concept. Because problem resolving principles of the method and the apparatus are similar, mutual reference may be made to implementations of the apparatus and the method. Repeated descriptions are not described.

For ease of understanding embodiments of this application, before embodiments of this application are described, the following several descriptions are first provided. Definitions listed for many features in this application are merely used to explain functions of the features by using examples. For detailed content of the definitions, refer to a conventional technology.

In the following embodiments, first, second, third, fourth, and various numbers are merely used for differentiation for ease of description, but are not used to limit the scope of embodiments of this application. For example, used for differentiation between different fields and different information.

"Predefinition" may be implemented by prestoring corresponding code or a corresponding table in a device, or may be implemented in another manner in which related information may be indicated. A specific implementation of the "predefinition" is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

In embodiments of this application, words such as "example", "for example", and "in an (another) example" are used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

"At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof represents any combination of these items, including a single item (piece) or any combination of a plurality of items (pieces). For example, at least one item (piece) of a, b, and c may represent a, b, c, a and b, a and c, b and c, or a, b, and c. Each of a, b, and c may be in a singular form or a plural form.

For ease of understanding, a communication system to which an embodiment of this application may be applied is first described.

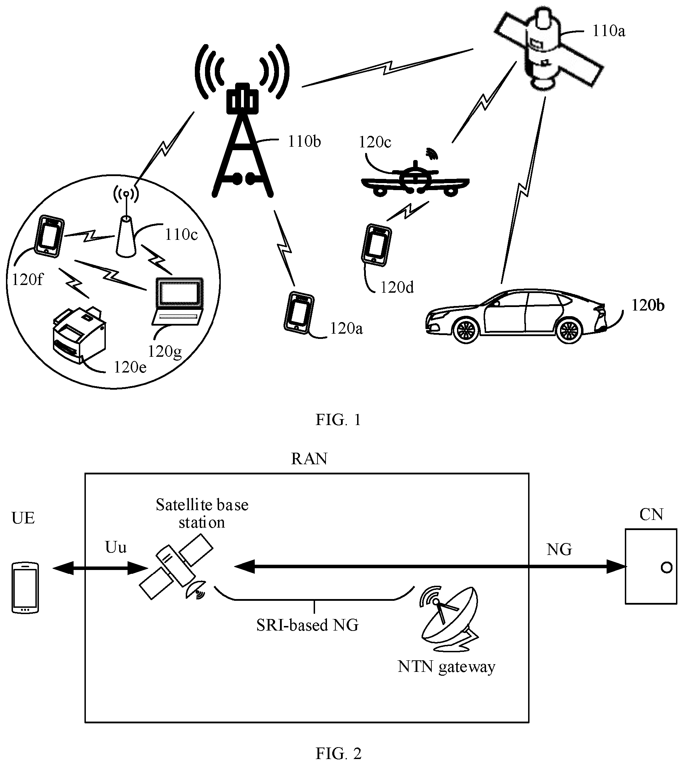

FIG. 1 is a diagram of a communication system to which an embodiment of this application may be applied. As shown in FIG. 1, the communication system may include at least one network device (for example, 110a, 110b, and 110c in FIG. 1), and may further include at least one terminal device (for example, 120a to 120g in FIG. 1). The terminal device may be mobile or fixed. Each network device may provide communication coverage for a specific geographical area, and may communicate with a terminal located in the coverage area. Network devices, a network device and a terminal device, and terminal devices may be connected to each other in a wired or wireless manner. FIG. 1 is merely a diagram. The communication system may further include another device, for example, may further include a wireless relay device and a wireless backhaul device.

Embodiments of this application are applicable to a communication system that integrates a terrestrial communication system and a satellite communication system. The communication system may also be referred to as a non-terrestrial network (non-terrestrial network, NTN) communication system.

The terrestrial communication system may be, for example, an LTE system, a universal mobile telecommunications system (universal mobile telecommunications system, UMTS), a 5G system or an NR system, or a communication system that is to be developed from a 5G system. This is not limited herein.

Compared with a conventional communication system, the satellite communication system has a wider coverage area, and can overcome natural geographical obstacles such as oceans, deserts, and mountains. To overcome shortcomings of the conventional communication system, the satellite communication system can be used as an effective supplement to the conventional communication system. Based on different orbital altitudes, satellite communication systems can be classified into the following three types: a geostationary earth orbit (geostationary earth orbit, GEO) satellite communication system, a medium earth orbit (medium earth orbit, MEO) satellite communication system, and a low earth orbit (low earth orbit, LEO) satellite communication system. The GEO satellite communication system may also be referred to as a synchronous orbit satellite system.

A GEO satellite, commonly also referred to as a geostationary orbit satellite, may have an orbital altitude of 35,786 kilometers (km). A main advantage of the GEO satellite is that the GEO satellite is stationary relative to the ground and provides a large coverage area. However, the GEO satellite also has obvious disadvantages. For example, if the GEO satellite is at an extremely long distance from the earth, a large-diameter antenna is required. For another example, the GEO satellite has long transmission latency that is about 0.5 seconds, and cannot satisfy a requirement of a real-time service. For still another example, the GEO satellite has limited orbit resources, high transmission costs, and cannot provide coverage for polar areas. An MEO satellite has an orbit altitude of 2,000 km to 35,786 km, and a small quantity of MEO satellites can implement global coverage. However, the MEO satellite has longer transmission latency than a LEO satellite and is mainly used for positioning and navigation. The LEO satellite has an orbit altitude of 300 km to 2,000 km. Compared with the MEO and GEO satellites, the LEO satellite has a lower orbit altitude, shorter data propagation latency, a smaller power loss, and lower transmission costs. Therefore, the LEO satellite communication system has made great progress in recent years.

It is generally considered that an NTN has different channel characteristics (for example, large transmission latency and large Doppler shift) compared with terrestrial communication. For example, round-trip latency of the GEO satellite communication system is 238 milliseconds to 270 milliseconds (ms), and round-trip latency of the LEO satellite communication system is 8 ms to 20 ms.

Operating modes of a satellite can be classified into a transparent (transparent) mode and a regenerative (regenerative) mode. When the satellite operates in the transparent mode, the satellite has a relay and forwarding function. A gateway has functions or some functions of a base station. In this case, the gateway may be considered as a base station. When the satellite operates in the regenerative mode, the satellite has a data processing capability and has functions or some functions of a base station. In this case, the satellite may be considered as a base station.

FIG. 2 is a diagram of an NTN in a regenerative mode. As shown in FIG. 2, a satellite has a part or all functions of a base station, and may be referred to as a satellite base station. The satellite base station may provide a radio access service, and schedule a radio resource for a terminal device that accesses a network through the satellite base station. The satellite base station may communicate with the terminal through a universal terrestrial radio access network-user (universal terrestrial radio access network-user, Uu) interface. The satellite base station and a core network (core network, CN) may communicate with each other through a next generation (next generation, NG) network interface, and the satellite base station and the core network may exchange non-access stratum (non-access stratum, NAS) signaling of the core network and service data of a user through the NG interface. A satellite radio interface (satellite radio interface, SRI) interface is a feeder link between an NTN gateway and the satellite. In FIG. 2, the SRI interface may be used as a part of the next generation (next generation, NG) network interface to implement communication interaction between the satellite base station and the core network.

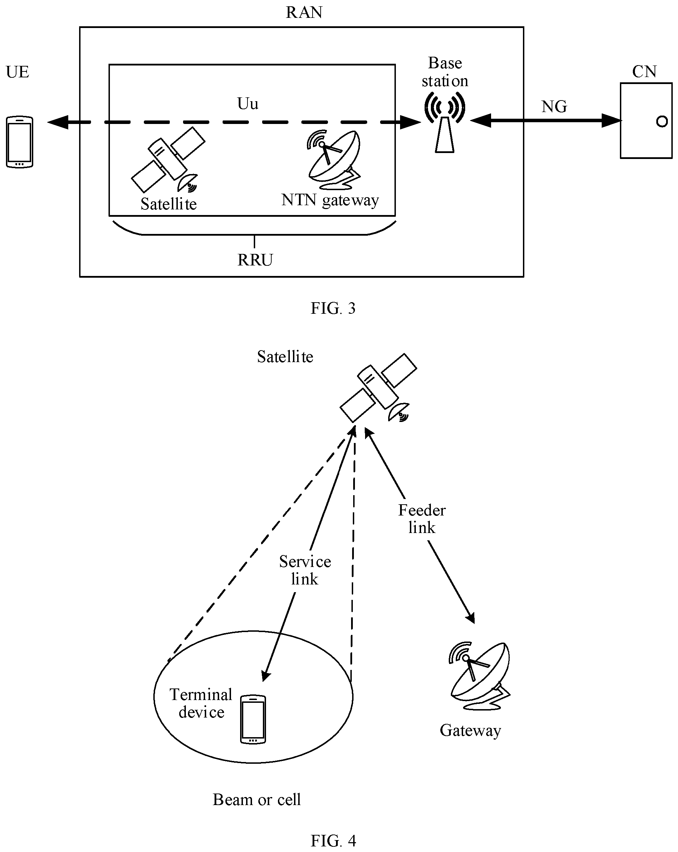

FIG. 3 is a diagram of another network architecture applicable to this application. As shown in FIG. 3, a terminal device communicates with a terrestrial base station through a Uu interface. A satellite may implement transparent payload transmission between the terminal device and the terrestrial base station. The satellite and an NTN gateway may be considered as remote radio units (remote radio unit, RRU) of the terrestrial base station, to implement transparent forwarding of a signal. In other words, the satellite supports functions such as radio frequency filtering, frequency conversion, and amplification, and a signal waveform remains unchanged. Forwarding by the satellite is transparent to the terminal device. The terrestrial base station and a CN may communicate with each other through an NG interface, and exchange NAS signaling of the core network and service data of the terminal device through the NG interface.

FIG. 4 is a diagram of a satellite communication scenario. As shown in FIG. 4, network devices in the satellite communication scenario include a satellite and a gateway (gateway). A terminal device includes an Internet of Things terminal, a mobile phone mobile terminal, a high-altitude aircraft, and the like. The terminal device may alternatively be a terminal device in another form and with another performance, or the like. This is not limited herein. A link between the satellite and the terminal device is referred to as a service link (service link), and a link between the satellite and the gateway is referred to as a feeder link (feeder link). The gateway may also be referred to as a gateway station. It should be noted that embodiments of this application may also be applied to a satellite communication scenario obtained through extension performed based on FIG. 3.

The terminal device in embodiments of this application is a device that can access a wireless communication network. The terminal and the network device may communicate with each other through an air interface technology (for example, NR or LTE). Terminals may also communicate with each other through an air interface technology (for example, NR or LTE). The terminal device may also be referred to as user equipment (user equipment, UE), a terminal, a user, an access terminal, a subscriber unit, a subscriber station, a mobile station, a remote station, a remote terminal, a mobile device, a user terminal, a wireless communication device, a user agent, a user apparatus, or the like. For ease of description, these names are collectively referred to as a terminal device below. The terminal device may be widely used in various scenarios, for example, enhanced mobile broadband (enhanced mobile broadband, eMBB), ultra-reliable low-latency communication (ultra-reliable low-latency communication, URLLC), massive machine-type communications (massive machine-type communications, mMTC), D2D, V2X, MTC, IoT, virtual reality, augmented reality, industrial control, self-driving, telemedicine, smart grid, smart furniture, smart office, smart wearable, smart transportation, or smart city. The terminal device may be a mobile phone (for example, 120a, 120d, and 120f in FIG. 1), a tablet computer, a computer (for example, a computer 120g in FIG. 1) having a wireless transceiver function, a wearable device, a vehicle (for example, 120b in FIG. 1), an unmanned aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used for the terminal device are not limited in this application.

The network device in embodiments of this application may be a device configured to communicate with a terminal device, or may be a device that enables the terminal device to access a wireless communication network. The network device may be a base station (base station), a NodeB (NodeB), an evolved NodeB (evolved NodeB, eNodeB, or eNB), a transmission reception point (transmission reception point, TRP), a next-generation NodeB (next-generation NodeB, gNB) in a 5G system, an access network device in an open radio access network (open radio access network, O-RAN, or open RAN), a next generation base station in a 6G system, a satellite base station in an NTN (for example, the satellite base station in FIG. 2), a base station in a future mobile communication system, an access node in a wireless fidelity (wireless fidelity, Wi-Fi) system, or the like. Alternatively, the network device may be a module or a unit that completes some functions of the base station, for example, may be a central unit (central unit, CU), a distributed unit (distributed unit, DU), a central unit-control plane (CU control plane, CU-CP) module, or a central unit-user plane (CU user plane, CU-UP) module. The network device may be a macro base station (for example, 110b in FIG. 1), may be a micro base station or an indoor base station (for example, 110c in FIG. 1), or may be a relay node, a donor node, or the like. A specific technology and a specific device form that are used for the network device are not limited in this application.

In an implementation, the network device includes but is not limited to: a base station (base station), an evolved NodeB (evolved NodeB, eNodeB), a transmission reception point, a next generation NodeB (next generation NodeB, gNB) in a 5G mobile communication system, an access network device in an open radio access network (O-RAN), a next generation base station in a 6th generation (6th generation, 6G) mobile communication system, a base station in a future mobile communication system, an access node in a wireless fidelity (wireless fidelity, Wi-Fi) system, or the like. Alternatively, the network device may be a module or a unit that completes some functions of the base station, for example, may be a central unit (central unit, CU), a distributed unit (distributed unit, DU), a central unit-control plane (CU control plane, CU-CP) module, or a central unit-user plane (CU user plane, CU-UP) module.

In some deployments, the network device may include a central unit (central unit, CU) and a distributed unit (distributed unit, DU). A RAN device including a CU node and a DU node splits protocol layers of a gNB in an NR system. Functions of some protocol layers are centrally controlled by the CU. Functions of a part or all remaining protocol layers are distributed in the DU, and the CU centrally controls the DU. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for encryption and decryption, integrity protection, header compression, serial number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing a non-real-time protocol and a service, to implement functions of an RRC layer. The DU is responsible for processing a physical layer protocol and a real-time service, to implement functions of a radio link control (radio link control, RLC) layer, a media access control (media access control, MAC) layer, and a physical (physical, PHY) layer. In some deployments, the CU may be further divided into a central unit-control plane (CU-CP) node and a central unit-user plane (CU-UP) node. The CU-CP is responsible for a control plane function, and the CU-UP is responsible for a user plane function.

The network device and/or the terminal device may be at fixed positions, or may be movable. The network device and/or the terminal device may be deployed on land, including an indoor or outdoor device, or a handheld or vehicle-mounted device, or may be deployed on water, or may be deployed on an airplane, a balloon, and an artificial satellite in the air. An environment/scenario at which the network device and the terminal device are located is not limited in this application.

It should be understood that the network architecture shown above is merely an example for description, and the network architecture applicable to embodiments of this application is not limited thereto. Any network architecture that can implement functions of the network elements is applicable to embodiments of this application.

Considering that a satellite has advantages such as being less susceptible to natural disasters or external damage, research on using the satellite as a network device (such as a base station) of a mobile communication system is underway, to provide communication services for areas such as oceans and forests. Different from a terrestrial network device, the satellite moves at a higher speed and has a longer signal propagation distance relative to the ground. Consequently, a signal path loss is greater when the satellite serves as the network device. In addition, due to high-speed movement of the satellite, coverage and service time of a single satellite and each beam under the single satellite are limited. Therefore, the communication scenario imposes a higher requirement on access latency of the terminal.

A satellite system is used as an example. A satellite serves as a network device. In an initial access phase, a terminal device receives a synchronization signal/physical broadcast channel block (synchronization signal/physical broadcast channel block, SS/PBCH block or SSB) from the satellite, receives a system information block 1 (system information block 1, SIB 1) based on the SSB, and then receives a SIB 19 based on a search space that is of the SIB 19 and that is configured in the SIB 1, to obtain ephemeris information carried in the SIB 19. After obtaining cell information and the ephemeris information, the terminal device sends a random access preamble to the satellite through an uplink resource corresponding to the SSB, to initiate a random access procedure.

However, because the satellite moves at a higher speed and has a longer signal propagation distance relative to the ground, a signal path loss of the satellite is greater. The terminal device may be incapable of demodulating the SIB 1 and/or the SIB 19. Consequently, the terminal device cannot complete initial access. Therefore, to help the satellite serve as a base station to provide a communication service for the terminal device, how to overcome a signal path loss to improve coverage of a signal for communication between the terminal device and the satellite base station, how to ensure that the terminal device stably completes initial access, and how to reduce access latency of the terminal device are urgent problems that need to be resolved currently.

The network architecture and the service scenario described in embodiments of this application are intended to describe the technical solutions in embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

When the method provided in this application is applied to the systems in FIG. 1 to FIG. 4, the terminal device or the module in the terminal device in FIG. 1 to FIG. 4 may implement the method performed by the terminal device in embodiments of this application, the network device or the module in the network device in FIG. 1 to FIG. 4 may implement the method performed by the network device in embodiments of this application, or the satellite or the module in the satellite in FIG. 1 to FIG. 4 may implement the method performed by the network device in embodiments of this application.

It may be understood that a specific structure of an execution body of the method provided in embodiments of this application is not particularly limited in this application. The method performed by the terminal device may be applied to the terminal device or the module or a chip in the terminal device, and the method performed by the network device may be applied to the network device or the module or a chip in the network device, provided that a program that records code of the method provided in embodiments of this application can be run to perform communication according to the method provided in embodiments of this application. The following uses interaction between the terminal device and the network device as an example for description.

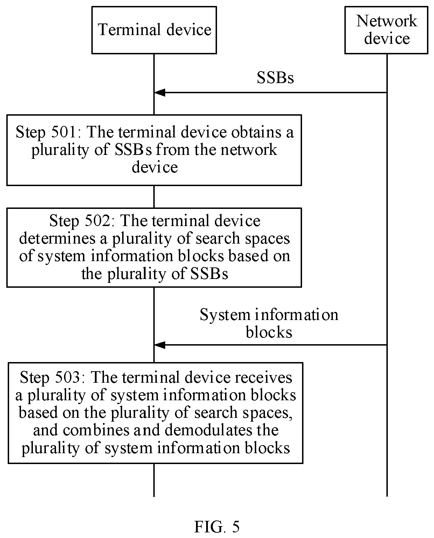

FIG. 5 is a schematic flowchart of a communication method according to an embodiment of this application. The method includes the following steps.

Step 501: A terminal device obtains a plurality of SSBs from a network device.

Indexes of any two of the plurality of SSBs are different. The network device may be a satellite, or may be a terrestrial base station. This is not limited in this application.

In this application, the network device may send Q SSBs in each SSB periodicity based on an SSB signal coverage pattern (which may also be referred to as an SSB scanning pattern or an SSB coverage pattern), where indexes of any two of the Q SSBs are different, and Q is an integer greater than 1. The Q SSBs may be distinguished through indexes (index) of the SSBs. The network device may broadcast SSBs with different indexes in different areas. It may be understood that the SSBs with different indexes represent that downlink synchronization signals in different beam directions cover and serve different areas. Content carried by SIBs 1 associated with the SSBs with different indexes is the same. If an SSB is further associated with a SIB 19, content carried by SIBs 19 associated with the SSBs with different indexes is also the same. A value of Q is not limited. For example, the value of Q may be a power of 2. For example, Q is one of the following: 4, 8, 16, 32, 64, 128, 256, 512, 1024, and other values. The value of Q may be agreed on or predefined, and the network device may indicate the value of Q to the terminal device.

The SSB signal coverage pattern includes coverage areas of the Q SSBs, and the SSB signal coverage patterns may be defined in different shapes, for example, a square, a rectangle, and other shapes. When the SSB signal coverage pattern is a square, each row of the SSB signal coverage pattern includes coverage areas of G SSBs, and each column of the SSB signal coverage pattern includes coverage areas of G SSBs. When the SSB signal coverage pattern is a rectangle, each row of the SSB signal coverage pattern includes coverage areas of H SSBs, and each column of the SSB signal coverage pattern includes coverage areas of J SSBs.

The SSB signal coverage pattern may be preset or agreed on in a protocol, or may be determined by the network device. The network device may indicate the SSB signal coverage pattern to the terminal device. How to specifically indicate the SSB signal coverage pattern is not limited in this application. The coverage areas that are of the Q SSBs and that are included in the SSB signal coverage pattern are distributed in ascending order of indexes of the Q SSBs in a manner of first row then column or first column then row. When the SSB signal coverage pattern is a square, each row includes coverage areas of G SSBs, and each column includes coverage areas of G SSBs. When the SSB signal coverage pattern is a rectangle, each row includes coverage areas of H SSBs, and each column includes coverage areas of J SSBs.

For example, Q=256. For one SSB periodicity, the network device may sequentially send SSBs whose indexes are 0, 1, 2, ..., 255 in ascending order of indexes of the SSBs, in other words, send 256 SSBs in each SSB periodicity. It is assumed that 20 milliseconds (ms) are used as a group, that is, eight SSBs are sent within 20 ms. In this case, 32 groups are required for 256 SSBs, and duration of one SSB periodicity is 32*20=640 ms. It is assumed that each row in the SSB signal coverage pattern includes G SSBs, and each column also includes G SSBs. The network device may start from a 1st column in the SSB signal coverage pattern in an index order of the SSBs. Indexes of G SSBs from bottom to top in the 1st column are respectively 0 to G-1, and indexes of 16 SSBs from bottom to top in a 2nd column are respectively G to 2G-1. Cases of other columns can be deduced by analogy.

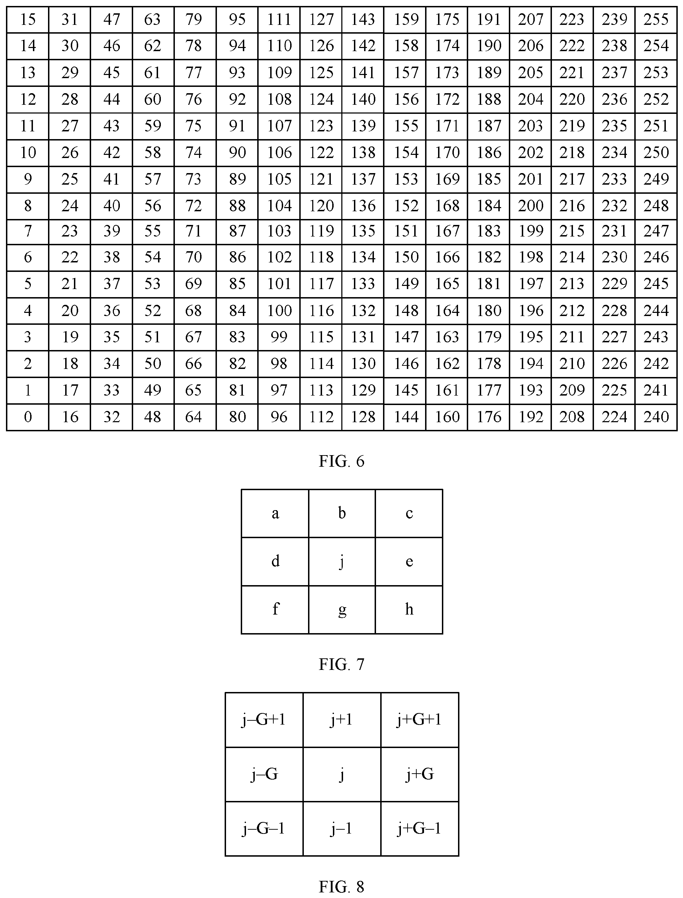

For example, Q=256. As shown in FIG. 6, the network device sends 256 SSBs by using 256 beams, and a coverage area corresponding to each beam is a small grid in the figure. In other words, a coverage area of one SSB is a small grid. In the SSB signal coverage pattern shown in the figure, each row includes coverage areas of G=16 beams, and each column includes coverage areas of G=16 beams. A number in each grid represents an index of an SSB sent by using a beam. In the SSB signal coverage pattern shown in the figure, 256 SSBs are distributed in ascending order of indexes in a manner of first row then column. To be specific, indexes of the SSBs are numbered from 0, and a largest index is 255. Starting from a 1st column on the left, indexes of 16 SSBs from bottom to top in the 1st column are 0 to 15, and indexes of 16 SSBs from bottom to top in a 2nd column are 16 to 31. Cases of other columns can be deduced by analogy. For details, refer to the figure.

A beam is a main lobe of a signal radiation pattern. A coverage area of a beam (or an SSB) may be a projection range of the beam on a ground surface. The network device may adjust a weight of an antenna, so that the beam points to different directions, has different coverage areas, and has different antenna gains.

In an implementation, the plurality of SSBs obtained by the terminal device may be located in a same SSB periodicity.

In this application, the plurality of SSBs obtained by the terminal device may be some or all of the Q SSBs sent by the network device in one SSB periodicity. If the plurality of SSBs are some of the Q SSBs, how the terminal device determines the plurality of SSBs from the Q SSBs is not limited in this application. The following provides several possible implementations.

Implementation 1: The plurality of SSBs are first Y SSBs in all SSBs, received by the terminal device, sorted based on signal quality of the SSBs, and Y is an integer greater than 1.

Coverage areas of some SSBs may be far away from a position of the terminal device, and the terminal device may be incapable of receiving these SSBs. Consequently, in one SSB periodicity, the terminal device may receive only P SSBs in the Q SSBs, where P is an integer less than or equal to Q and greater than 0. The P SSBs are all the SSBs received by the terminal device.

Each SSB received by the terminal device corresponds to one piece of signal quality. The signal quality may be reference signal received quality (reference signal received quality, RSRQ), reference signal received power (reference signal received power, RSRP), a signal to interference plus noise ratio (signal to interference plus noise ratio, SINR), or the like. This is not limited in this application. The terminal device may sort all the received SSBs based on signal quality of the SSBs, for example, sort the SSBs in descending order of signal quality, and use Y SSBs sorted at the top as the plurality of SSBs. The terminal device demodulates the Y SSBs, to obtain content included in the Y SSBs.

A value of Y is agreed on in a protocol or predefined, or may be determined by the terminal device. This is not limited in this application.

Implementation 2: The plurality of SSBs are SSBs whose signal quality is greater than a quality threshold and that are in all SSBs received by the terminal device.

Similar to Implementation 1, each SSB received by the terminal device corresponds to one piece of signal quality. The terminal device may use, as the plurality of SSBs to be finally demodulated, the SSBs whose signal quality is greater than the quality threshold and that are in received P SSBs (that is, all the SSBs).

The quality threshold is agreed on in a protocol or predefined, or may be determined by the terminal device, or may be indicated by the network device. This is not limited in this application.

Implementation 3: The plurality of SSBs are determined according to a first rule, where the first rule is agreed on in a protocol or predefined, or may be determined by the terminal device.

The following provides several examples of the first rule.

Example 1: The first rule is that the plurality of SSBs include an SSB whose index is j, and the plurality of SSBs include a part or all of SSBs corresponding to an index range [j, j+2X], where X is an integer greater than 1. A value of X is agreed on in a protocol or predefined, or may be determined by the terminal device, or may be indicated by the network device.

j is an index of a first SSB, and the first SSB is an SSB with optimal signal quality in all the received SSBs.

In Example 1, 2X consecutive SSBs starting from the SSB whose index is j are used as a candidate set, the terminal device selects a plurality of SSBs from the candidate set, and the selected plurality of SSBs include the first SSB.

For example, if the index j of the SSB with optimal signal quality received by the terminal device is 7, and X is 4, an index range of the candidate set is [7, 15], and indexes of included SSBs are {7, 8, 9, 10, 11, 12, 13, 14, 15}.

Example 2: The first rule is that the plurality of SSBs include an SSB whose index is j, and the plurality of SSBs include a part or all of SSBs corresponding to an index range [j-X, j+X].

j is an index of a first SSB, and the first SSB is an SSB with optimal signal quality in all the received SSBs.

For example, if the index j of the SSB with optimal signal quality received by the terminal device is 7, and X is 4, an index range of the candidate set is [7-4, 7+4], and indexes of included SSBs are {3, 4, 5, 6, 7, 8, 9, 10, 11}.

In this application, a value range of an index of an SSB may be [0, Q-1]. When a determined value of the index is not within the value range, it may be considered that the determined value of the index is invalid. For example, if j=4 and X=6, although the determined index range is [-2, 10], because -2 and -1 are invalid indexes, an actual index range is [0, 10].

Example 3: The first rule is that the plurality of SSBs include an SSB whose index is j, and the plurality of SSBs include an SSB corresponding to at least one of the following indexes:

$$j-N\times G+1,\ j+1,\ j-1,\ j,\ j+N\times G+1,\ j-G,\ j+G,\ j-N\times G-1,\ \text{and}\ j+N\times G-1,$$

where

j is an index of a first SSB, and the first SSB is an SSB with optimal signal quality in all the received SSBs. G is the length of the SSB signal coverage pattern, G is an integer greater than 1, and a value of G is agreed on in a protocol or predefined, or may be indicated by the network device. A value of N is agreed on in a protocol or predefined, or may be indicated by the network device, or may be determined by the terminal device.

SSBs corresponding to the foregoing plurality of indexes may be used as a candidate set, that is, indexes of SSBs in the candidate set are {j-N×G+1, j+1, j-1, j+N×G+1, j-G, j+G, j-N×G-1, j+N×G-1}.

For example, if N=0 or 1, the plurality of SSBs include an SSB corresponding to at least one of the following indexes:

$$j-G+1,\ j+1,\ j-1,\ j,\ j+G+1,\ j-G,\ j+G,\ j-G-1,\ \text{and}\ j+G-1.$$

In this application, a value range of an index of an SSB may be [0, Q-1]. Therefore, in Example 3, when a value of an index determined based on j, N, and G is not within the foregoing value range, it may be considered that the value of the index is invalid, and the value is discarded.

For example, Q=256. It is assumed that the network device sends SSBs based on the SSB signal coverage pattern shown in FIG. 6, j=7, N=0 or 1, and G=16. With reference to the foregoing descriptions, the indexes of the SSBs in the candidate set are {-10, -19, -8, 6, 7, 8, 22, 23, 24}. Because values less than 0 exist and are not between [0, 255], these values are discarded. Finally, indexes of the SSBs in the candidate set are {6, 7, 8, 22, 23, 24}. In other words, the plurality of SSBs obtained by the terminal device are determined from the candidate set.

In another implementation, an index that satisfies the following form may be used as an index in the candidate set:

$$\{j{-}N{\times}G{+}1,\ j{+}1,\ j{-}1,\ j{+}N{\times}G{+}1,\ j{-}G,\ j{+}G,\ j{-}N{\times}G{-}1,\ j{+}N{\times}G{-}1\} \ \text{mod}\ G = j\ \text{or}\ j{\pm}1,$$

where mod is a modulo operation.

For example, Q=256. It is assumed that the network device sends SSBs based on the SSB signal coverage pattern shown in FIG. 6, j=7, N=0 or 1, and G=16. With reference to the foregoing description, the determined indexes of the SSBs are {-10, -19, -8, 6, 7, 8, 22, 23, 24}.

A candidate set formed by indexes satisfying {-10, -19, -8, 6, 7, 8, 22, 23, 24} mod 16 = 7 or 7±1 is {6, 7, 8, 22, 23, 24}. In other words, the plurality of SSBs obtained by the terminal device are determined from the candidate set.

Example 4: The first rule is that the plurality of SSBs include a first SSB (an SSB whose index is j), and the plurality of SSBs include at least one SSB whose coverage area is adjacent to a coverage area of the first SSB. The first SSB is an SSB with optimal signal quality in all the received SSBs.

For example, as shown in FIG. 7, a small grid in the figure represents a coverage area of an SSB. A number in each grid in the figure represents an index of an SSB. Coverage areas of eight SSBs are included around a coverage area of an SSB whose index is j, and indexes of the eight SSBs are respectively a, b, c, d, e, f, and g. In this case, the plurality of SSBs include the SSB whose index is j, and include at least one of the SSBs whose indexes are a, b, c, d, e, f, g, and h.

For example, it is assumed that each row in the SSB signal coverage pattern includes G SSBs, and each column also includes G SSBs. The network device may start from the 1st column in the SSB signal coverage pattern in an index order of the SSBs. Indexes of G SSBs from bottom to top in the 1st column are respectively 0 to G-1, and indexes of 16 SSBs from bottom to top in the 2nd column are respectively G to 2G-1. Cases of other columns can be deduced by analogy. In this case, as shown in FIG. 8, a small grid in the figure represents a coverage area of an SSB. A number in each grid in the figure represents an index of an SSB. Indexes of eight SSBs included around an SSB whose index is j are respectively j-G+1, j+1, j-1, j+G+1, j-G, j+G, j-G-1, and j+G-1.

In addition, a value range of the index of the SSB may be [0, Q-1]. If a determined value of the index of the SSB is not within the value range, it may be considered that the value of the index is invalid, and the value is discarded. For example, G=16. If j=7 and G=16, values of three obtained indexes are negative numbers: -10, -19, and -8. These indexes are invalid. Finally, actually obtained indexes are 6, 7, 8, 22, 23, and 24.

Step 502: The terminal device determines a plurality of search spaces of system information blocks based on the plurality of SSBs.

The plurality of search spaces are in one-to-one correspondence with the plurality of SSBs, and one of the plurality of search spaces is determined based on one of the plurality of SSBs.

In this application, the terminal device may determine one search space for one system information block based on each SSB. The system information block may be used for initial access, and it may be understood as that the system information block includes information required by the terminal device for initial access.

For example, the system information block is one or both of the following: a SIB 1; and
a system information block carrying ephemeris information, which may be, for example, a SIB 19, or another system information block, where the ephemeris information is ephemeris information of the network device.

For another example, the system information block includes one of the following information:

random access channel occasion (random access channel occasion, RO) resource configuration information;
ephemeris information of the network device;
random access channel occasion (random access channel, RACH) common configuration information (rach-ConfigCommon); and
SSB-related information, including at least one of the following information: a quantity of SSBs, an SSB periodicity, and an SSB pattern (pattern).

In this application, considering access latency in an initial access process, a search space for the SIB 19 used to carry the ephemeris information may be unbound from the SIB 1, and a new search space is introduced for the system information block carrying the ephemeris information, without depending on data parsing of the SIB 1. The new search space is introduced for the system information block carrying the ephemeris information, and the search space for the system information block carrying the ephemeris information may be indicated through an SSB.

In this application, how the SSB indicates the search space for the system information block is described. For example, when the system information block is the SIB 1, a start slot $n_0$ of the search space for the system information block in time domain and an index i of the SSB satisfy the following form:

$$n_0 = (O * 2^u + \lfloor i * M \rfloor)\ \text{mod}\ N_{slot}^{frame,u},\ \text{Formula (1)}$$

i is the index of the SSB. $\mu$ is used to determine a subcarrier spacing. For example, when $\mu$=0, the subcarrier

spacing is 15 kHz; when $\mu$=1, the subcarrier spacing is 30 kHz; when $\mu$=2, the subcarrier spacing is 60 kHz. Other cases can be deduced by analogy. Details are not described again. O represents an offset of a control resource set (control resource set, CORESET) #0 corresponding to an SSB whose index is 0 relative to a start position of a system frame in which the SSB #0 (that is, the SSB whose index is 0) is located, and is represented by milliseconds (ms). Because 1 ms includes $2^u$ slots, $O * 2^u$ represents a quantity of slots included in O ms.

M is an interval between search spaces of CORESETs #0 corresponding to two consecutively sent SSBs, and is represented by slots (slot); and $N_{slot}^{frame,u}$ represents a quantity of slots in one system frame. For example, when a subcarrier spacing is 30 kHz, $N_{slot}^{frame,u} = 20$. $\lfloor \ \rfloor$ represents rounding down to the nearest integer, and mod is a modulo operator.

For example, when the system information block is the system information block carrying the ephemeris information, a start slot $n_1$ of the search space for the system information block in time domain and the index i of the SSB satisfy the following form:

$$n_1 = (O * 2^u + \lfloor (i \bmod L) * M \rfloor) \bmod N_{slot}^{frame,u} \ , \quad \text{or} \quad n_1 = (O * 2^u + \lfloor (i \bmod L) *$$

$$M \rfloor) \bmod N_{slot}^{frame,u} + 1, \text{ Formula (2)}$$

L is a maximum quantity of candidate SSBs in a time unit. One time unit may be a half system frame, one system frame, a plurality of system frames, or the like, which may be specifically agreed on in advance, or may be configured by the network device. L may be determined based on different SSB patterns (SSB pattern) defined in a protocol. For example, when the SSB pattern used by the network device to send an SSB is case C, the subcarrier spacing is 30 kHz, and L=8. For another example, when the SSB pattern is case D, the subcarrier spacing is 120 kHz, and L=64.

In addition, it should be noted that a frequency domain position of a search space for a system information block is not limited in embodiments of this application. How the network device indicates the frequency domain position of the search space for the system information block is not limited in this application.

Step 503: The terminal device receives a plurality of system information blocks based on the plurality of search spaces, and combines and demodulates the plurality of system information blocks.

The terminal device may obtain one system information block based on each of the plurality of search spaces. For example, the terminal device receives, in each of the plurality of search spaces, one piece of scheduling information for scheduling a system information block, to obtain a plurality of pieces of scheduling information, and then receives the plurality of system information blocks based on the plurality of pieces of scheduling information.

In an implementation, the plurality of system information blocks are located in a same system information block periodicity.

In this application, a specific process of combining and demodulating the plurality of system information blocks is not limited, and details are not described herein.

According to the foregoing method, the terminal device receives the plurality of system information blocks in the plurality of search spaces, and the terminal device combines and demodulates the plurality of system information blocks, so that a demodulation success rate of the system information blocks can be increased, thereby increasing a success rate of an initial access process, improving initial access performance, and reducing initial access latency.

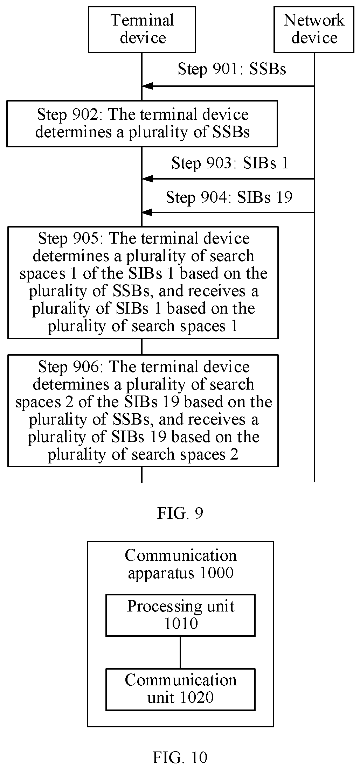

With reference to the foregoing descriptions, FIG. 9 is a schematic flowchart of a communication method according to an embodiment of this application. The method includes the following steps.

Step 901: A network device sends SSBs.

For example, the network device sends the SSB based on the SSB signal coverage pattern shown in FIG. 6. In one SSB periodicity, the network device sends 256 SSBs.

Step 902: A terminal device determines a plurality of SSBs.

It is assumed that an index of an SSB with optimal signal quality received by the terminal device is 7, indexes of the plurality of SSBs determined by the terminal device according to a first rule are {6, 7, 8, 22, 23, 24}.

Step 903: The network device sends SIBs 1.

Each SSB sent by the network device corresponds to one SIB 1. If one SSB periodicity includes 256 SSBs, the network device may send 256 SIBs 1 in one SIB 1 periodicity.

Step 904: The network device sends SIBs 19.

Herein, an example in which a system information block carrying ephemeris information is the SIB 19 is used for description. When the system information block carrying the ephemeris information is another SIB, refer to the description herein.

Herein, an example in which a search space for the SIB 19 is indicated through an SSB is used for description.

The search space for the SIB 19 may alternatively be indicated through a SIB 1. This is not limited in this application.

Step 905: The terminal device determines a plurality of search spaces 1 of the SIBs 1 based on the plurality of SSBs, and receives a plurality of SIBs 1 based on the plurality of search spaces 1.

The terminal device may determine one search space 1 of one SIB 1 based on each of the plurality of SSBs. A correspondence exists between a start slot $n_0$ of the search space 1 of the SIB 1 in time domain and an index i of the SSB. For details, refer to the description of the foregoing Formula (1). Details are not described herein again.

The terminal device receives one piece of scheduling information 1 in each of the plurality of search spaces 1, and each piece of scheduling information 1 is used for scheduling one SIB 1. Therefore, the terminal device receives the plurality of SIBs 1 based on the plurality of search spaces 1, and the terminal device may combine and demodulate the plurality of SIBs 1, to improve a demodulation success rate of the SIBs 1.

In an implementation, the plurality of SIBs 1 are located in one SIB 1 periodicity, so that the plurality of SIBs 1 can be combined and demodulated in one SIB 1 periodicity, thereby improving a demodulation success rate of the SIBs 1, reducing receiving latency of the SIBs 1, and reducing initial access latency. This is particularly applicable to a scenario such as NTN.

Step 906: The terminal device determines a plurality of search spaces 2 of the SIBs 19 based on the plurality of SSBs, and receives a plurality of SIBs 19 based on the plurality of search spaces 2.

The terminal device may determine one search space 2 of one SIB 19 based on each of the plurality of SSBs. A correspondence exists between a start slot $n_1$ of the search space 2 of the SIB 19 in time domain and the index i of the SSB. For details, refer to the description of the foregoing Formula (2). Details are not described herein again.

The terminal device receives one piece of scheduling information 2 in each of the plurality of search spaces 2, and each piece of scheduling information 2 is used for scheduling one SIB 19. Therefore, the terminal device receives the plurality of SIBs 19 based on the plurality of search spaces 2, and the terminal device may combine and demodulate the plurality of SIBs 19, to improve a demodulation success rate of the SIBs 19.

In an implementation, the plurality of SIBs 19 are located in one SIB 19 periodicity, so that the plurality of SIBs 19 can be combined and demodulated in one SIB 19 periodicity, thereby improving a demodulation success rate of the SIBs 19, reducing receiving latency of the SIBs 19, and reducing initial access latency. This is particularly applicable to a scenario such as NTN.

It may be understood that, to implement functions in the foregoing embodiments, the terminal device or the network device includes corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on specific application scenarios and design constraint conditions of the technical solutions.

The following are diagrams of possible structures of communication apparatuses according to embodiments of this application. The communication apparatuses may be configured to implement functions of the terminal device or the network device in the foregoing method embodiments. Therefore, beneficial effects of the foregoing method embodiments can also be implemented. In embodiments of this application, the communication apparatus may be a terminal device, or may be a module (for example, a chip) used in a terminal device; or the communication apparatus may be a network device, or may be a module (for example, a chip) used in a network device.

As shown in FIG. 10, a communication apparatus 1000 includes a processing unit 1010 and a communication unit 1020. The communication apparatus 1000 is configured to implement functions of the terminal device or the network device in the method embodiment shown in FIG. 5 or FIG. 9.

When the communication apparatus 1000 is configured to implement the functions of the terminal device: The communication unit is configured to obtain a plurality of synchronization signal/physical broadcast channel blocks SSBs, where indexes of any two of the plurality of SSBs are different.

The processing unit is configured to determine a plurality of search spaces of system information blocks based on the plurality of SSBs, where one of the plurality of search spaces is determined based on one of the plurality of SSBs.

The communication unit is configured to: receive a plurality of system information blocks based on the plurality of search spaces, and combine and demodulate the plurality of system information blocks.

In a possible implementation, the system information block includes one or both of the following:

a system information block 1 SIB 1; and
a system information block carrying ephemeris information.

In a possible implementation, the plurality of SSBs are first Y SSBs in all received SSBs sorted based on signal quality of the SSBs, and Y is an integer greater than 1.

In a possible implementation, the plurality of SSBs are determined according to a first rule, and the first rule is agreed on in a protocol or predefined.

In a possible implementation, the first rule is:

the plurality of SSBs include a part or all of SSBs corresponding to an index range [j, j+2X]; or
the plurality of SSBs include a part or all of SSBs corresponding to an index range [j-X, j+X], where
j is an index of a first SSB, the first SSB is an SSB with optimal signal quality in all the received SSBs, and X is an integer greater than 1.

In a possible implementation, the plurality of SSBs include a first SSB, and the first SSB is an SSB with optimal signal quality in all the received SSBs; and

the plurality of SSBs include an SSB corresponding to at least one of the following indexes:

$$j-G+1, j+1, j-1, j, j+G+1, j-G, j+G, j-G-1, \text{ and } j+G-1,$$

where
j is an index of the first SSB, X is an integer greater than 1, and G is the length of an SSB signal coverage pattern of the SSBs.

In a possible implementation, the plurality of SSBs are located in a same SSB periodicity.

In a possible implementation, the plurality of system information blocks are located in a same system information block periodicity.

For more detailed descriptions about the processing unit 1010 and the communication unit 1020, directly refer to related descriptions in the foregoing method embodiments. Details are not described herein.

It should be understood that division of the units in the foregoing apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to execute a function of the unit. In addition, all or some of the units may be integrated, or may be implemented independently. The processing element herein may also be referred to as a processor, and may be an integrated circuit having a signal processing capability. During implementation, operations in the foregoing methods or the foregoing units may be implemented through a hardware integrated logic circuit in a processor element, or may be implemented in a form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the unit in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

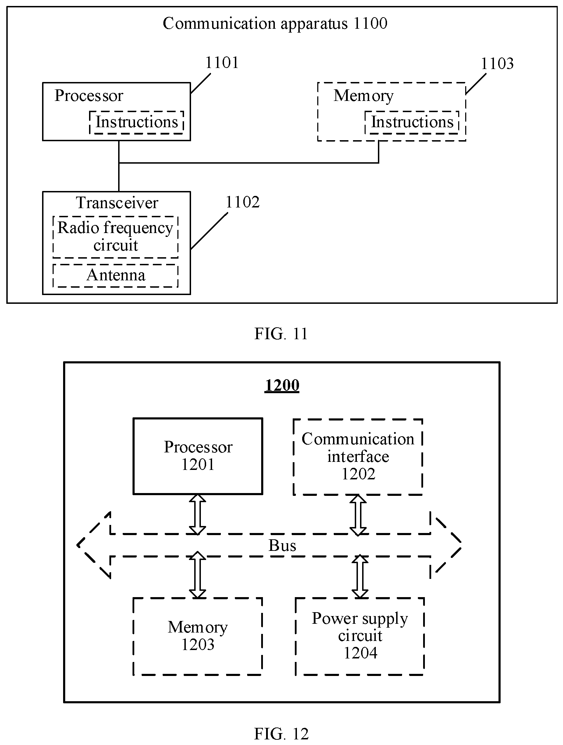

In another possible product form, the terminal device or the network device in embodiments of this application may be implemented through a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a terminal device, or a chip or a chip system in a terminal device. Alternatively, the communication apparatus 1100 may be a network device, or a chip or a module in a network device. FIG. 11 shows only main components of the communication apparatus 1100. In addition to the processor 1101 and the transceiver 1102, the communication apparatus 1100 may further include a memory 1103 and an input/output apparatus (not shown in the figure).

Optionally, the processor 1101 is mainly configured to: process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1101, the transceiver 1102, and the memory 1103 may be connected through a communication bus.

After the communication apparatus is powered on, the processor 1101 may read the software program in the memory 1103, interpret and execute instructions of the software program, and process the data of the software program. When data needs to be sent wirelessly, the processor 1101 performs baseband processing on the to-be-sent data, and then outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 1000 may be in a form of the communication apparatus 1100 shown in FIG. 11.

In an example, a function/an implementation process of the processing unit 1010 in FIG. 10 may be implemented through the processor 1101 in the communication apparatus 1100 shown in FIG. 11 by invoking computer-executable instructions stored in the memory 1103. A function/an implementation process of the communication unit 1020 in FIG. 10 may be implemented through the transceiver 1102 in the communication apparatus 1100 shown in FIG. 11.

In another possible product form, the terminal device or the network device in this application may use a composition structure shown in FIG. 12, or include components shown in FIG. 12. FIG. 12 is a diagram of composition of a communication apparatus 1200 according to this application.

As shown in FIG. 12, the communication apparatus 1200 includes at least one processor 1201. Optionally, the communication apparatus further includes a communication interface 1202.

When related program instructions are executed in the at least one processor 1201, the communication apparatus 1200 may be enabled to implement the method provided in any one of the foregoing embodiments and any possible design of the method. Alternatively, the processor 1201 is configured to implement, through a logic circuit or by executing code instructions, the method provided in any one of the foregoing embodiments and any possible design of the method.

The communication interface 1202 may be configured to receive the program instructions and transmit the program instructions to the processor. Alternatively, the communication interface 1202 may be configured to perform communication interaction between the communication apparatus 1200 and another communication device, for example, exchange control signaling and/or service data. For example, the communication interface 1202 may be configured to receive a signal from an apparatus other than the communication apparatus 1200, and transmit the signal to the processor 1201; or send a signal from the processor 1201 to a communication apparatus other than the communication apparatus 1200.

Optionally, the communication interface 1202 may be a code and/or data read/write interface circuit, or the communication interface 1202 may be a signal transmission interface circuit between a communication processor and a transceiver, or may be a pin of a chip.

Optionally, the communication apparatus 1200 may further include at least one memory 1203, and the memory 1203 may be configured to store related program instructions and/or data that are/is required. It should be noted that the memory 1203 may exist independently of the processor 1201, or may be integrated with the processor 1201. The memory 1203 may be located inside the communication apparatus 1200, or may be located outside the communication apparatus 1200. This is not limited.

Optionally, the communication apparatus 1200 may further include a power supply circuit 1204, and the power supply circuit 1204 may be configured to supply power to the processor 1201. The power supply circuit 1204 may be located in a same chip as the processor 1201, or may be located in a chip other than a chip in which the processor 1201 is located.

Optionally, the communication apparatus 1200 may further include a bus, and parts of the communication apparatus 1200 may be interconnected through the bus.

In some embodiments, in terms of hardware implementation, a person skilled in the art may figure out that the communication apparatus 1000 shown in FIG. 10 may be in a form of the communication apparatus 1200 shown in FIG. 12.

In an example, a function/an implementation process of the processing unit 1010 in FIG. 10 may be implemented through the processor 1201 in the communication apparatus 1200 shown in FIG. 12 by invoking computer-executable instructions stored in the memory 1203. A function/an implementation process of the communication unit 1020 in FIG. 10 may be implemented through the communication interface 1202 in the communication apparatus 1200 shown in FIG. 12.

It should be noted that the structure shown in FIG. 12 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or may be any regular processor.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in the base station or the terminal as discrete components.

All or some of the foregoing embodiments may be implemented by software, hardware, firmware, or any combination thereof. When embodiments are implemented by software, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

**Claims**

1. A communication method, comprising:

   obtaining a plurality of synchronization signal/physical broadcast channel blocks SSBs, wherein indexes of any two of the plurality of SSBs are different;
   determining a plurality of search spaces of system information blocks based on the plurality of SSBs, wherein one of the plurality of search spaces is determined based on one of the plurality of SSBs; and
   receiving a plurality of system information blocks based on the plurality of search spaces, and combining and demodulating the plurality of system information blocks.

2. The method according to claim 1, wherein the system information block is one or both of the following:

   a system information block 1 SIB 1; and
   a system information block carrying ephemeris information.

3. The method according to claim 1 or 2, wherein the plurality of SSBs are first Y SSBs in all received SSBs sorted based on signal quality of the SSBs, and Y is an integer greater than 1.

4. The method according to any one of claims 1 to 3, wherein the plurality of SSBs are determined according to a first rule, and the first rule is agreed on in a protocol or predefined.

5. The method according to claim 4, wherein the first rule is:

   the plurality of SSBs comprise a part or all of SSBs corresponding to an index range [j, j+2X]; or
   the plurality of SSBs comprise a part or all of SSBs corresponding to an index range [j-X, j+X], wherein
   j is an index of a first SSB, the first SSB is an SSB with optimal signal quality in all the received SSBs, and X is an integer greater than 1.

6. The method according to any one of claims 1 to 3, wherein the plurality of SSBs comprise a first SSB, and the first SSB is an SSB with optimal signal quality in all the received SSBs; and

   the plurality of SSBs comprise an SSB corresponding to at least one of the following indexes:

   $$j–G+1, j+1, j–1, j, j+G+1, j–G, j+G, j–G–1, \text{ and } j+G–1,$$

   wherein
   j is an index of the first SSB, X is an integer greater than 1, and G is a length of an SSB signal coverage pattern of the SSBs.

7. The method according to any one of claims 1 to 6, wherein the plurality of SSBs are located in a same SSB periodicity.

8. The method according to any one of claims 1 to 7, wherein the plurality of system information blocks are located in a same system information block periodicity.

9. A communication apparatus, comprising:

   a communication unit, configured to obtain a plurality of synchronization signal/physical broadcast channel blocks SSBs, wherein indexes of any two of the plurality of SSBs are different;
   a processing unit, configured to determine a plurality of search spaces of system information blocks based on the plurality of SSBs, wherein one of the plurality of search spaces is determined based on one of the plurality of SSBs; and
   the communication unit, configured to: receive a plurality of system information blocks based on the plurality of search spaces, and combine and demodulate the plurality of system information blocks.

10. The apparatus according to claim 9, wherein the system information block is one or both of the following:

    a system information block 1 SIB 1; and
    a system information block carrying ephemeris information.

11. The apparatus according to claim 9 or 10, wherein the plurality of SSBs are first Y SSBs in all received SSBs sorted based on signal quality of the SSBs, and Y is an integer greater than 1.

12. The apparatus according to any one of claims 9 to 11, wherein the plurality of SSBs are determined according to a first rule, and the first rule is agreed on in a protocol or predefined.

13. The apparatus according to claim 12, wherein the first rule is:

    the plurality of SSBs comprise a part or all of SSBs corresponding to an index range [j, j+2X]; or
    the plurality of SSBs comprise a part or all of SSBs corresponding to an index range [j-X, j+X], wherein
    j is an index of a first SSB, the first SSB is an SSB with optimal signal quality in all the received SSBs, and X is an integer greater than 1.

14. The apparatus according to any one of claims 9 to 13, wherein the plurality of SSBs comprise the first SSB, and the first SSB is an SSB with optimal signal quality in all the received SSBs; and

    the plurality of SSBs comprise an SSB corresponding to at least one of the following indexes:

$$j\!-\!G\!+\!1,\; j\!+\!1,\; j\!-\!1,\; j,\; j\!+\!G\!+\!1,\; j\!-\!G,\; j\!+\!G,\; j\!-\!G\!-\!1,\; \text{and}\; j\!+\!G\!-\!1,$$

    wherein
    j is an index of the first SSB, X is an integer greater than 1, and G is a length of an SSB signal coverage pattern of the SSBs.

15. The apparatus according to any one of claims 9 to 14, wherein the plurality of SSBs are located in a same SSB periodicity.

16. The apparatus according to any one of claims 9 to 15, wherein the plurality of system information blocks are located in a same system information block periodicity.

17. A communication apparatus, comprising a processor and a memory, wherein
    the processor is configured to execute a computer program or instructions stored in the memory, to enable the communication apparatus to implement the method according to any one of claims 1 to 8.

18. A computer-readable storage medium, storing a computer program or instructions, wherein when the computer program or the instructions are run on a computer, the computer is enabled to implement the method according to any one of claims 1 to 8.

19. A chip, comprising a processor, wherein the processor is coupled to a memory, and is configured to execute a computer program or instructions stored in the memory, to enable the chip to implement the method according to any one of claims 1 to 8.

**20.** A computer program product, wherein when a computer reads and executes the computer program product, the method according to any one of claims 1 to 8 is enabled to be performed.

FIG. 1

RAN

FIG. 2

FIG. 3

FIG. 4

```
┌─────────────────┐                        ┌─────────────┐
│ Terminal device │                        │  Network    │
│                 │                        │  device     │
└────────┬────────┘                        └──────┬──────┘
         │                   SSBs                 │
         │◄─────────────────────────────────────│
         │                                        │
┌────────┴─────────────────────────────┐         │
│ Step 501: The terminal device obtains a│        │
│   plurality of SSBs from the network   │        │
│              device                    │        │
└────────┬───────────────────────────────┘       │
         │                                        │
┌────────┴───────────────────────────────┐       │
│  Step 502: The terminal device          │       │
│ determines a plurality of search spaces │       │
│ of system information blocks based on    │      │
│      the plurality of SSBs              │       │
└────────┬────────────────────────────────┘      │
         │         System information             │
         │              blocks                    │
         │◄──────────────────────────────────────│
┌────────┴────────────────────────────────┐      │
│ Step 503: The terminal device receives    │     │
│ a plurality of system information blocks   │    │
│ based on the plurality of search spaces,   │    │
│  and combines and demodulates the          │    │
│ plurality of system information blocks      │   │
└────────┬────────────────────────────────┘      │
         │                                        │
```

FIG. 5

| 15 | 31 | 47 | 63 | 79 | 95 | 111 | 127 | 143 | 159 | 175 | 191 | 207 | 223 | 239 | 255 |
| 14 | 30 | 46 | 62 | 78 | 94 | 110 | 126 | 142 | 158 | 174 | 190 | 206 | 222 | 238 | 254 |
| 13 | 29 | 45 | 61 | 77 | 93 | 109 | 125 | 141 | 157 | 173 | 189 | 205 | 221 | 237 | 253 |
| 12 | 28 | 44 | 60 | 76 | 92 | 108 | 124 | 140 | 156 | 172 | 188 | 204 | 220 | 236 | 252 |
| 11 | 27 | 43 | 59 | 75 | 91 | 107 | 123 | 139 | 155 | 171 | 187 | 203 | 219 | 235 | 251 |
| 10 | 26 | 42 | 58 | 74 | 90 | 106 | 122 | 138 | 154 | 170 | 186 | 202 | 218 | 234 | 250 |
| 9 | 25 | 41 | 57 | 73 | 89 | 105 | 121 | 137 | 153 | 169 | 185 | 201 | 217 | 233 | 249 |
| 8 | 24 | 40 | 56 | 72 | 88 | 104 | 120 | 136 | 152 | 168 | 184 | 200 | 216 | 232 | 248 |
| 7 | 23 | 39 | 55 | 71 | 87 | 103 | 119 | 135 | 151 | 167 | 183 | 199 | 215 | 231 | 247 |
| 6 | 22 | 38 | 54 | 70 | 86 | 102 | 118 | 134 | 150 | 166 | 182 | 198 | 214 | 230 | 246 |
| 5 | 21 | 37 | 53 | 69 | 85 | 101 | 117 | 133 | 149 | 165 | 181 | 197 | 213 | 229 | 245 |
| 4 | 20 | 36 | 52 | 68 | 84 | 100 | 116 | 132 | 148 | 164 | 180 | 196 | 212 | 228 | 244 |
| 3 | 19 | 35 | 51 | 67 | 83 | 99 | 115 | 131 | 147 | 163 | 179 | 195 | 211 | 227 | 243 |
| 2 | 18 | 34 | 50 | 66 | 82 | 98 | 114 | 130 | 146 | 162 | 178 | 194 | 210 | 226 | 242 |
| 1 | 17 | 33 | 49 | 65 | 81 | 97 | 113 | 129 | 145 | 161 | 177 | 193 | 209 | 225 | 241 |
| 0 | 16 | 32 | 48 | 64 | 80 | 96 | 112 | 128 | 144 | 160 | 176 | 192 | 208 | 224 | 240 |

FIG. 6

| a | b | c |
| d | j | e |
| f | g | h |

FIG. 7

| j–G+1 | j+1 | j+G+1 |
| j–G | j | j+G |
| j–G–1 | j–1 | j+G–1 |

FIG. 8

```
┌──────────┐                    ┌──────────┐
│ Terminal │                    │ Network  │
│  device  │                    │  device  │
└────┬─────┘                    └────┬─────┘
     │        Step 901: SSBs         │
     │◄──────────────────────────────│
┌────┴──────────────────────────┐    │
│ Step 902: The terminal device  │   │
│ determines a plurality of SSBs │   │
└────┬───────────────────────────┘   │
     │        Step 903: SIBs 1        │
     │◄──────────────────────────────│
     │       Step 904: SIBs 19        │
     │◄──────────────────────────────│
┌────┴──────────────────────────┐    │
│ Step 905: The terminal device  │   │
│ determines a plurality of search│  │
│ spaces 1 of the SIBs 1 based on the│ │
│ plurality of SSBs, and receives a │ │
│ plurality of SIBs 1 based on the │ │
│ plurality of search spaces 1   │    │
└────┬───────────────────────────┘   │
┌────┴──────────────────────────┐    │
│ Step 906: The terminal device  │   │
│ determines a plurality of search│  │
│ spaces 2 of the SIBs 19 based on the│ │
│ plurality of SSBs, and receives a │ │
│ plurality of SIBs 19 based on the │ │
│ plurality of search spaces 2   │    │
└────┬───────────────────────────┘   │
     │                               │
```

FIG. 9

```
┌──────────────────────────────┐
│      Communication            │
│      apparatus 1000           │
│  ┌────────────────────────┐   │
│  │   Processing unit       │  │
│  │      1010               │  │
│  └───────────┬────────────┘   │
│  ┌───────────┴────────────┐   │
│  │   Communication         │  │
│  │     unit 1020           │  │
│  └────────────────────────┘   │
└──────────────────────────────┘
```

FIG. 10

Communication apparatus 1100

Processor 1101

Instructions

Memory 1103

Instructions

Transceiver 1102

Radio frequency circuit

Antenna

FIG. 11

**1200**

Processor 1201

Communication interface 1202

Bus

Memory 1203

Power supply circuit 1204

FIG. 12

## INTERNATIONAL SEARCH REPORT

| International application No. |
|---|
| **PCT/CN2024/115956** |

### A. CLASSIFICATION OF SUBJECT MATTER

H04W74/08(2024.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNABS, CNTXT, VEN, USTXT, WOTXT, EPTXT, CNKI: 同步, 系统信息块, 搜索空间, 合并, 组合, 联合, 解调, 解码, 多个, 周期, 接收, 成功率, 成功; SSB, SIB, combine, merge, complicate, demodulation, block, multi

### C. DOCUMENTS CONSIDERED TO BE RELEVANT

| Category* | Citation of document, with indication, where appropriate, of the relevant passages | Relevant to claim No. |
|---|---|---|
| Y | CN 116058008 A (QUALCOMM INC.) 02 May 2023 (2023-05-02) description, paragraphs [0027]-[0116], and figures 1-6 | 1-20 |
| Y | CN 116171610 A (QUALCOMM INC.) 26 May 2023 (2023-05-26) description, paragraphs [0086]-[0214], and figures 1-18 | 1-20 |
| Y | WO 2018218539 A1 (HUAWEI TECHNOLOGIES CO., LTD.) 06 December 2018 (2018-12-06) description, pages 5-21, and figures 1-21 | 1-20 |
| A | CN 104349484 A (CHINA ACADEMY OF TELECOMMUNICATIONS TECHNOLOGY) 11 February 2015 (2015-02-11) entire document | 1-20 |
| A | US 2021250921 A1 (FUJITSU LTD.) 12 August 2021 (2021-08-12) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 November 2024** | **29 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/115956**

| Patent document cited in search report | | | Publication date (day/month/year) | Patent family member(s) | | | Publication date (day/month/year) |
|---|---|---|---|---|---|---|---|
| CN | 116058008 | A | 02 May 2023 | US | 2022095293 | A1 | 24 March 2022 |
| | | | | US | 11910372 | B2 | 20 February 2024 |
| | | | | EP | 4214963 | A1 | 26 July 2023 |
| | | | | US | 2024129911 | A1 | 18 April 2024 |
| | | | | WO | 2022060641 | A1 | 24 March 2022 |
| CN | 116171610 | A | 26 May 2023 | WO | 2022000295 | A1 | 06 January 2022 |
| | | | | IN | 202227059169 | A | 25 November 2022 |
| | | | | EP | 4173379 | A1 | 03 May 2023 |
| | | | | US | 2023209485 | A1 | 29 June 2023 |
| | | | | EP | 4173379 | A4 | 10 April 2024 |
| WO | 2018218539 | A1 | 06 December 2018 | US | 2020100169 | A1 | 26 March 2020 |
| | | | | EP | 3614731 | A1 | 26 February 2020 |
| | | | | EP | 3614731 | A4 | 22 April 2020 |
| CN | 104349484 | A | 11 February 2015 | WO | 2015018345 | A1 | 12 February 2015 |
| US | 2021250921 | A1 | 12 August 2021 | JP | 2022505980 | A | 14 January 2022 |
| | | | | EP | 3876622 | A1 | 08 September 2021 |
| | | | | EP | 3876622 | A4 | 24 November 2021 |
| | | | | WO | 2020087543 | A1 | 07 May 2020 |
| | | | | JP | 2023026511 | A | 24 February 2023 |
| | | | | KR | 20210064350 | A | 02 June 2021 |
| | | | | KR | 102499121 | B1 | 16 February 2023 |
| | | | | US | 12035320 | B2 | 09 July 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311200965